# EUROPÄISCHE PATENTANMELDUNG

(11) **EP 2 075 693 A1**
(43) Veröffentlichungstag der Anmeldung: **01.07.2009**
(21) Anmeldenummer: 08013175.8
(22) Anmeldetag: 22.07.2008
(51) Int. Cl.: G06F 9/445

(54) **Automatisierungsgerät und Verfahren zur Aktualisierung von Daten eines Automatisierungsgeräts**

(71) Anmelder: Siemens Aktiengesellschaft, 80333 München (DE)
(72) Erfinder: Danz, Mirko, 91058 Erlangen (DE); Extra, Johannes, 91052 Erlangen (DE)

(57) **Zusammenfassung**

Die Erfindung betrifft ein Verfahren zur Aktualisierung von Daten eines Automatisierungsgeräts (1), wobei vom Automatisierungsgerät (1), mit einem aktuellen Datensatz (2), der Daten aufweist, eine Automatisierungsfunktionalität durchgeführt wird, wobei während die Automatisierungsfunktionalität mit dem aktuellen Datensatz (2) durchgeführt wird, ein weiterer Datensatz (3a) an das Automatisierungsgerät (1) übermittelt und im Automatisierungsgerät (1) gespeichert wird, wobei nach Eintritt eines Freigabeereignisses die Automatisierungsfunktionalität (1) mit dem weiteren Datensatz (3a) durchgeführt wird. Weiterhin betrifft die Erfindung ein diesbezügliches Automatisierungsgeräts (1). Die Erfindung ermöglicht eine Aktualisierung von Daten eines Automatisierungsgerätes, bei der keine oder nur eine kurze Unterbrechung der Automatisierungsfunktionalität des Automatisierungsgerätes notwendig ist.

## Beschreibung

Die Erfindung betrifft ein Verfahren zur Aktualisierung von Daten eines Automatisierungsgerätes, sowie ein diesbezügliches Automatisierungsgerät.

In der Automatisierungstechnik werden Maschinen wie z.B. Werkzeugmaschinen, Produktionsmaschinen und/oder Roboter und technische Anlagen mit Automatisierungsgeräten gesteuert und/oder geregelt. Ein Automatisierungsgerät kann solchermaßen z.B. in Form einer Steuereinrichtung und/oder einer Regeleinrichtung vorliegen. Die Steuereinrichtung kann dabei z.B. in Form einer numerischen Steuerung einer Maschine und/oder einer Anlage vorliegen.

Das Automatisierungsgerät führt dabei eine Automatisierungsfunktionalität aus, die z.B. in Form einer Steuerfunktionalität und/oder einer Regelfunktionalität vorliegen kann.

Zur Realisierung der Automatisierungsfunktionalität sind in dem Automatisierungsgerät Daten gespeichert. Die Daten liegen dabei üblicherweise z.B. in Form von Firmware, in Form von Anwender erstellten Programmen, sowie in Form von Konfigurationsdaten, Parametrierungsdaten, Systemdaten und/oder Anwenderdaten vor. Wenn die Daten des Automatisierungsgerätes z.B. zum Zwecke eines Updates verändert werden sollen, dann erfolgt das in der Regel über die kommunikative Anbindung einer Recheneinrichtung, wie z.B. einem Personal Computer oder einem Laptop, auf dem ein Engineeringsystem abläuft, an das Automatisierungsgerät und einem anschließenden Übermitteln der neuen Daten von der Recheneinrichtung an das Automatisierungsgerät. Andere Ausprägungen, wie z.B. das Einbringen der neuen Daten über ein Speichermodul sind ebenfalls möglich. Üblicherweise erfolgt das Austauschen der aktuellen Daten gegen die neuen Daten, mit dem eine Automatisierungsfunktionalität in Zukunft ausgeführt werden soll, zeitgleich mit dem Einbringen der neuen Daten in das Automatisierungsgerät. Damit kann ein Anwender das Wirksam werden, der neuen Daten nur über den Zeitpunkt des Übermittelns der Daten in das Automatisierungsgerät steuern. Eine solchermaßen durchgeführte Aktualisierung der Daten erfordert bei handelsüblichen Automatisierungsgeräten im Allgemeinen eine Unterbrechung des regulären Betriebs des Automatisierungsgeräts, d.h. die Automatisierungsfunktionalität wird während der Aktualisierung nicht mehr ausgeführt und damit ist ein regulärer Betrieb der Maschine während der Aktualisierung nicht mehr möglich.

Diese Tatsache wiegt umso schwerer, wenn z.B. eine Aktualisierung von Daten von mehreren insbesondere in Beziehung stehenden Automatisierungsgeräten gemacht werden soll und bei handelsüblichen Automatisierungsgeräten somit eine komplette Anlage oder mehrere Maschinen gleichzeitig stillgesetzt werden müssen.

Weiterhin können die auftretenden Akteure unterschiedlich sein. Z.B. der Akteur "Maschinenhersteller" lädt die neuen Daten aus der Ferne über eine Kommunikationsverbindung in das Automatisierungsgerät, aber der Akteur "Maschinenbetreiber" vor Ort bestimmt den Zeitpunkt, wann die Maschine oder Anlage, die von einem oder mehreren Automatisierungsgeräten gesteuert und/oder geregelt wird, stillgesetzt werden kann. Weiterhin arbeiten häufig die beiden Akteure in unterschiedlichen Zeitzonen und deren Arbeitszeiten überlappen sich deshalb häufig nicht. Das Laden der neuen Daten in das Automatisierungsgerät und das Auswechseln der aktuellen Daten gegen die neuen Daten lässt sich somit häufig nicht genau zu einem bestimmten Zeitpunkt ausführen.

Ferner muss z.B. bei einer Anlage, in der viele Automatisierungsgeräte eingesetzt sind und für alle gleichzeitig eine Aktualisierung der Daten durchzuführen ist, bei handelsüblichen Automatisierungsgeräten die Anlage für einen längeren Zeitraum stillgesetzt werden, um bei allen Automatisierungsgeräten das Laden der neuen Daten durchführen zu können.

Der Erfindung liegt die Aufgabe zugrunde, eine Aktualisierung von Daten eines Automatisierungsgerätes zu ermöglichen, bei der keine oder nur eine kurze Unterbrechung der Automatisierungsfunktionalität des Automatisierungsgerätes notwendig ist.

Diese Aufgabe wird gelöst durch ein Verfahren zur Aktualisierung von Daten eines Automatisierungsgeräts, wobei vom Automatisierungsgerät, mit einem aktuellen Datensatz, der Daten aufweist, eine Automatisierungsfunktionalität durchgeführt wird, wobei während die Automatisierungsfunktionalität mit dem aktuellen Datensatz durchgeführt wird, ein weiterer Datensatz an das Automatisierungsgerät übermittelt und im Automatisierungsgerät gespeichert wird, wobei nach Eintritt eines Freigabeereignisses die Automatisierungsfunktionalität mit dem weiteren Datensatz durchgeführt wird.

Weiterhin wird diese Aufgabe gelöst durch ein Automatisierungsgerät, wobei das Automatisierungsgerät ausgebildet ist mit einem aktuellen Datensatz, der Daten aufweist, eine Automatisierungsfunktionalität durchzuführen, wobei das Automatisierungsgerät derart ausgebildet ist, dass während das Automatisierungsgerät die Automatisierungsfunktionalität mit dem aktuellen Datensatz durchführt, ein weiterer Datensatz an das Automatisierungsgerät übermittelbar und im Automatisierungsgerät speicherbar ist, wobei das Automatisierungsgerät derart ausgebildet ist, dass das Automatisierungsgerät nach Eintritt eines Freigabeereignisses die Automatisierungsfunktionalität mit dem weiteren Datensatz durchführt.

Vorteilhafte Ausbildungen der Erfindung ergeben sich aus den abhängigen Ansprüchen.

Vorteilhafte Ausbildungen des Verfahrens ergeben sich analog zur vorteilhaften Ausbildung des Automatisierungsgerätes und umgekehrt.

Es erweist sich als vorteilhaft, wenn während die Automatisierungsfunktionalität mit dem aktuellen Datensatz durchgeführt wird, mehrere weitere Datensätze an das Automatisierungsgerät übermittelt und im Automatisierungsgerät gespeichert werden, wobei unter den weiteren Datensätzen ein weiterer Datensatz ausgewählt wird, wobei nach Eintritt eines Freigabeereignisses die Automatisierungsfunktionalität mit dem ausgewählten weiteren Datensatz durchgeführt wird. Hierdurch wird auf einfache Art und Weise eine Auswahl eines bestimmten weiteren Datensatzes, der gegen den aktuellen Datensatz ausgetauscht werden soll, ermöglicht.

Ferner erweist es sich als vorteilhaft, wenn der weitere Datensatz oder die weiteren Datensätze von einer Recheneinrichtung und/oder von einer Bedieneinrichtung des Automatisierungsgeräts und/oder von einem in das Automatisierungsgerät gesteckten Wechselspeichers und/oder von einem weiteren Automatisierungsgerät, an das Automatisierungsgerät übermittelt werden. Hierdurch wird eine einfache Möglichkeit geschaffen, den weiteren Datensatz oder die weiteren Datensätze in das Automatisierungsgerät zu laden.

Ferner erweist es sich als vorteilhaft, wenn der Eintritt des Freigabeereignisses in Form eines Steckens eines Kodiersteckers in das Automatisierungsgerät und/oder in Form eines Schaltens eines Kodierschalters am Automatisierungsgerät und/oder in Form einer Eingabehandlung an einem mit dem Automatisierungsgerät über eine Kommunikationsverbindung verbundenen Recheneinrichtung und/oder in Form einer Eingabehandlung an einer mit dem Automatisierungsgerät über eine Kommunikationsverbindung verbundenen Bedieneinrichtung und/oder in Form einer Eingabehandlung am Automatisierungsgerät und/oder in Form des Eintritts eines definierten internen Ereignisses im Automatisierungsgerät und/oder in Form eines Auftretens eines Freigabesignals, welches dem Automatisierungsgeräts über eine Internetverbindung und/oder eine Modemverbindung übermittelt wird. Hierdurch können auf besonderes einfache Art und Weise die Daten zur Realisierung der Automatisierungsfunktionalität frei geschaltet werden.

Ferner erweist es sich als vorteilhaft, wenn das Automatisierungsgerät und/oder das weitere Automatisierungsgerät eine Uhr aufweisen und der Eintritt des Freigabeereignisses in Form eines Eintritts einer bestimmten Uhrzeit vorliegt. Hierdurch kann die Aktualisierung zeitgesteuert, z.B. gleichzeitig für mehrere Automatisierungsgeräte durchgeführt werden.

Ferner erweist es sich als vorteilhaft, wenn der Eintritt des Freigabeereignisses in Form eines Auftretens eines Freigabesignals, welches dem Automatisierungsgeräts von einem weiteren Automatisierungsgeräts übermittelt wird, vorliegt. Hierdurch wird z.B. eine zentrale Aktualisierung von mehreren Automatisierungsgeräten über ein weiteres Automatisierungsgerät, dass das Freigabesignal zentral an alle Automatisierungsgeräte übermittelt, ermöglicht.

Ferner erweist es sich als vorteilhaft, wenn der weitere Datensatz, der ausgewählt werden soll, vom weiteren Automatisierungsgerät vorgeben wird. Hierdurch wird z.B. ermöglicht, dass ein bestimmter weiterer Datensatz zentral von einem weiteren Automatisierungsgerät vorgegeben werden kann.

Ferner erweist es sich als vorteilhaft, wenn der weitere Datensatz oder die weiteren Datensätze über eine Modemverbindung und/oder Internetverbindung an das weitere Automatisierungsgerät übertragen werden. Hierdurch kann z.B. von einer Serviceeinrichtung, die z.B. bei einem entfernt lokalisierten Maschinenhersteller steht, stets ein neuer Datensatz an das weitere Automatisierungsgerät übertragen werden.

Ferner erweist es sich als vorteilhaft, wenn das weitere Automatisierungsgerät als Server ausgebildet ist. Eine Ausbildung des weiteren Automatisierungsgeräts in Form eines Servers stellt eine übliche Ausbildung des weiteren Automatisierungsgeräts dar. Die Hardware des Servers kann dabei z.B. in Form einer Steuer- und/oder Regeleinrichtung vorliegen, auf der eine entsprechende Server-Software, die eine Serverfunktionalität ermöglicht, abläuft. Die Server-Software kann dabei auch parallel neben der normalen Steuerungs- und/oder Regelungssoftware auf der Steuer- und/oder Regeleinrichtung ablaufen.

Ferner erweist es sich als vorteilhaft, wenn die Auswahl des weiteren Datensatzes unter den weiteren Datensätzen auch gleichzeitig den Eintritt des Freigabeereignisses darstellt. Hierdurch wird eine besonders einfache Freigabemöglichkeit geschaffen.

Weiterhin erweist es sich als vorteilhaft, wenn das Automatisierungsgerät derart ausgebildet ist, dass während die Automatisierungsfunktionalität mit dem aktuellen Datensatz durchgeführt wird mehrere weitere Datensätze an das Automatisierungsgerät übermittelbar und im Automatisierungsgerät speicherbar sind, wobei das Automatisierungsgerät derart ausgebildet ist, dass unter den weiteren Datensätzen ein weiterer Datensatz auswählbar ist, wobei das Automatisierungsgerät derart ausgebildet ist, dass nach Eintritt eines Freigabeereignisses die Automatisierungsfunktionalität mit dem ausgewählten weiteren Datensatz durchgeführt wird. Hierdurch wird auf einfache Art und Weise eine Auswahl eines bestimmten weiteren Datensatzes, der gegen den aktuellen Datensatz ausgetauscht werden soll, ermöglicht.

Ferner erweist es sich als vorteilhaft, wenn das Automatisierungssystem ein weiteres Automatisierungsgerät aufweist, das mit dem Automatisierungsgerät über eine Kommunikationsverbindung verbunden ist, wobei das weitere Automatisierungsgerät einen Speicher zur Speicherung des weitern Datensatzes oder weiteren Datensätzen aufweist, wobei das Automatisierungssystem derart ausgebildet ist, dass der weitere Datensatz oder die weiteren Datensätze von dem weiteren Automatisierungsgerät, an das Automatisierungsgerät übermittelbar sind. Hierdurch wird eine einfache Möglichkeit geschaffen, den weiteren Datensatz oder die weiteren Datensätze in das Automatisierungsgerät zu laden.

Ferner erweist es sich als vorteilhaft, wenn das weitere Automatisierungsgerät den weiteren Datensatz, der ausgewählt werden soll, dem Automatisierungsgerät vorgibt. Hierdurch wird z.B. ermöglicht, dass ein bestimmter weiterer Datensatz zentral von einem weiteren Automatisierungsgerät vorgegeben werden kann.

Ferner erweist es sich als vorteilhaft, wenn das weitere Automatisierungsgerät den Eintritt des Freigabeereignisses dem Automatisierungsgerät in Form eines Auftretens eines Freigabesignals übermittelt. Hierdurch wird z.B. eine zentrale Aktualisierung von mehreren Automatisierungsgeräten über ein weiteres Automatisierungsgerät, dass das Freigabesignal zentral an alle Automatisierungsgeräte übermittelt, ermöglicht.

Ferner erweist es sich als vorteilhaft, wenn der weitere Datensatz oder die weiteren Datensätze über eine Modemverbindung und/oder eine Internetverbindung an das weitere Automatisierungsgerät übertragbar sind. Hierdurch kann z.B. von einer Serviceeinrichtung, die z.B. bei einem entfernt lokalisierten Maschinenhersteller steht, stets ein neuer Datensatz an das weitere Automatisierungsgerät übertragen werden.

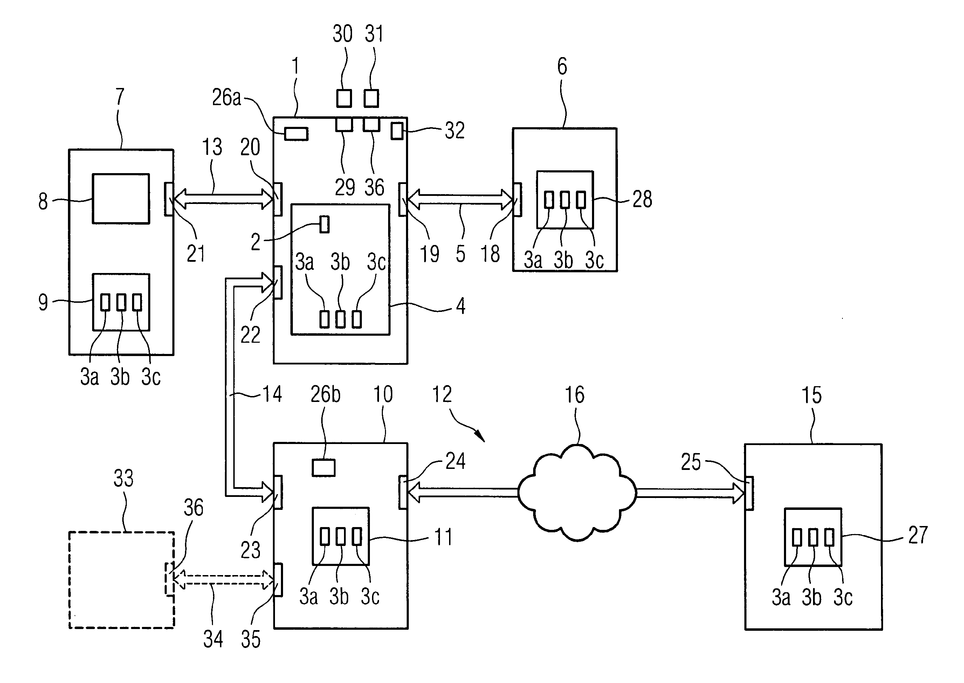

Ein Ausführungsbeispiel der Erfindung ist in der Zeichnung dargestellt und wird im Folgenden näher erläutert. Dabei zeigt die Figur ein Automatisierungssystem.

In der Figur ist in Form einer schematisierten blockförmigen Darstellung ein Automatisierungssystem dargestellt. Das Automatisierungssystem weist ein Automatisierungsgerät 1, ein weiteres Automatisierungsgerät 10, eine Recheneinrichtung, die im Rahmen des Ausführungsbeispiels als ein Personal Computer 7 ausgebildet ist, eine Bedieneinrichtung 6 und gegebenenfalls ein zusätzliches Automatisierungsgerät 33 auf.

Das Automatisierungsgerät 1 weist einen Speicher 4 auf, in dem ein aktueller Datensatz 2, mit dem gerade die Automatisierungsfunktionalität, die z.B. in Form einer Steuer-und/oder Regelungsfunktionalität vorliegen kann, ausgeführt wird. Der Datensatz weist dabei Daten auf, die im Rahmen des Ausführungsbeispiels in Form eines Anwenderprogramms (z.B. einem Teileprogramm) vorliegen. Im Rahmen des Ausführungsbeispiels liegt somit der Datensatz in Form einer einzelnen Datei, die das Anwenderprogramm beinhaltet, vor. Selbstverständlich kann ein Datensatz aber auch aus mehreren Dateien bestehen, so kann z.B. ein Datensatz auch aus dem oben beschriebenen Anwenderprogramm und Konfigurationsdaten bestehen. In diesem Fall würden die Daten in Form des Anwenderprogramms und der Konfigurationsdaten vorliegen, wobei das Anwenderprogramm und die Konfigurationsdaten in zwei separaten Dateien gespeichert sind, die zusammen einen Datensatz bilden.

Es sei an dieser Stelle angemerkt, dass die Daten im Allgemeinen z.B. in Form von Firmware, in Form von Anwender erstellten Programmen, sowie in Form von Konfigurationsdaten, Parametrierungsdaten, Systemdaten und/oder Anwenderdaten vorliegen können.

Der aktuelle Datensatz 2 ist in einem Speicher 4 des Automatisierungsgeräts 1 gespeichert. Weiterhin weist das Automatisierungsgerät 1 Kommunikationsschnittstellen 19, 20 und 22, die vorzugsweise als Busschnittstellen ausgebildet sind zur Kommunikation mit der Außenwelt auf. Über Kommunikationsverbindungen 5, 13 und 14, die vorzugsweise in Form von Busverbindungen (z.B. USB-Bus) ausgebildet sind, ist das Automatisierungsgerät 1 mit dem Personal Computer 7, der Bedieneinrichtung 6, die z.B. zur Bedienung einer Produktionsmaschine dient und mit einem weiteren Automatisierungsgerät 10 verbunden. Im Personal Computer 7 wird ein Engineeringsystem 8, das in Form eines Programms vorliegt, ausgeführt. Weiterhin weist der Personal Computer 7 einen Speicher 9 auf, in dem die drei weiteren Datensätze 3a, 3b und 3c, die jeweils Daten aufweisen, gespeichert sind. Im Rahmen des Ausführungsbeispiels liegen die Daten der Datensätze in Form eines jeweilig zugehörigen Anwenderprogramms vor. Mit den verschiedenen Anwenderprogrammen können z.B. unterschiedliche Werkstücke bearbeitet werden. Im Rahmen des Ausführungsbeispiels liegen somit die weiteren Datensätze jeweils in Form einer einzelnen Datei, die als Daten das jeweilige Anwenderprogramm beinhaltet, vor. Wie schon oben beschrieben, kann aber auch ein Datensatz aus mehreren Dateien bestehen, z.B. einer Datei für das Anwenderprogramm und einer separaten Datei für die Konfigurationsdaten. Das Anwenderprogramm und die Konfigurationsdaten bilden solchermaßen die Daten des jeweiligen Datensatzes.

Weiterhin weist der Personal Computer 7 eine Kommunikationsschnittstelle 21 auf, die im Rahmen des Ausführungsbeispiels als Busschnittstelle ausgeführt ist.

Wie schon oben beschrieben, führt das Automatisierungsgerät 1 die Automatisierungsfunktionalität gerade mit den aktuellen Datensatz 2 aus. Zur Aktualisierung der Daten mit der die Automatisierungsfunktionalität in Zukunft durchgeführt werden soll, werden vom Anwender zunächst mittels des Engineeringsystems 8 die im Speicher 9 gespeicherten weiteren Datensätze 3a, 3b und 3c über die Kommunikationsverbindung 13 in den Speicher 4 des Automatisierungsgeräts 1 geladen und im Automatisierungsgerät 1 gespeichert, was in der Figur dargestellt ist. Es sei an dieser Stelle angemerkt, dass im Rahmen des Ausführungsbeispiels der aktuelle Datensatz 2 und die weiteren Datensätze 3a, 3b und 3c in demselben Speicher 4 gespeichert werden. Dies muss allerdings nicht notwendigerweise so sein. Alternativ können der aktuelle Datensatz 2 und die weiteren Datensätze 3a, 3b und 3c auch in unterschiedlichen Speichern gespeichert werden, wobei die weiteren Datensätze 3a, 3b und 3c z.B. auch in einem Wechselspeicher, wie z.B. einer Flashkarte, gespeichert werden können, die in das Automatisierungsgerät eingesteckt wird. Es sei an dieser Stelle angemerkt, dass auch ein Speicher, insbesondere ein Wechselspeicher, welcher an das Automatisierungsgerät angeschlossen ist oder in das Automatisierungsgerät gesteckt ist, im Sinne der vorliegenden Erfindung als Bestandteil des Automatisierungsgerätes angesehen wird.

Zur Aktualisierung der Daten des Automatisierungsgerätes wird zunächst vom Anwender mittels des Engineeringsystems 8 ein weiterer Datensatz unter den im Automatisierungsgerät 1 gespeicherten weiteren Datensätzen 3a, 3b oder 3c ausgewählt. Im Rahmen des Ausführungsbeispiels wählt z.B. der Anwender den weiteren Datensatz 3a aus. Bei Eintritt eines Freigabeereignisses, das z.B. in Form einer Eingabehandlung am PC 7 (z.B. Drücken der Returntaste) vorliegen kann, wird der weitere Datensatz zu einem neuen aktuellen Datensatz definiert. Nach Eintritt des Freigabeereignisses wird dann die Automatisierungsfunktionalität mit dem weiteren Datensatz durchgeführt. Der ausgewählte weitere Datensatz wird nach Eintritt des Freigabeereignisses hierzu von dem z.B. relativ langsamen Speicher 4, der vorzugsweise als nichtflüchtiger Speicher ausgebildet ist, in z.B. einen schnellen Speicher (RAM-Speicher) des Automatisierungsgeräts 1 geladen und dort anstelle des aktuellen Datensatzes ausgeführt. Alternativ kann aber auch der Speicher 4 als ein schneller Speicher, insbesondere als ein schneller nichtflüchtiger Speicher, ausgeführt sein und nach dem Eintritt des Freigabeereignisses der ausgewählte weitere Datensatz 3a sofort anstelle des aktuellen Datensatzes 2 ausgeführt werden.

Falls nur ein einzelner weiterer Datensatz, der Daten aufweist, im Automatisierungsgerät 1 gespeichert ist, kann der Schritt der Auswahl des weiteren Datensatzes der in Zukunft für die Automatisierungsfunktionalität verwendet werden soll, entfallen.

Neben der gerade beschriebenen Möglichkeit des Übermittelns der weiteren Datensätze von dem Personal Computer 7 aus können die Datensätze auch von anderen Komponenten des Automatisierungssystems an das Automatisierungsgerät 1 übermittelt werden. So können die weiteren Datensätze 3a, 3b und 3c z.B. innerhalb eines Speichers 28 der Bedieneinrichtung 6 gespeichert sein und über die Kommunikationsverbindung 5 an das Automatisierungsgerät 1 übermittelt werden. Die Auswahl des weiteren Datensatzes, der in Zukunft für die Automatisierungsfunktionalität verwendet werden soll, kann dann ebenfalls über die Bedieneinrichtung 6 erfolgen. Weiterhin kann dann auch der Eintritt des Freigabeereignisses, z.B. über eine entsprechende Bedienhandlung, an der Bedieneinrichtung 6 ausgelöst werden. Alternativ oder zusätzlich hierzu kann das Übermitteln der Datensätze aber auch, z.B. von einem in eine Schnittstelle 29 des Automatisierungsgeräts 1 eingesteckten Wechselspeichers 30 auf dem die weiteren Datensätze gespeichert sind, aus erfolgen. Alternativ oder zusätzlich kann der des Eintritts des Freigabeereignisses, z.B. auch in Form eines definierten internen Ereignisses im Automatisierungsgerät, wie z.B. dem Eintritt eines Fehlers, dem Überschreiten eines Grenzwerts und/oder allgemein in Form eines Eintretens eines bestimmten Ereignisses, welches bei der Durchführung der Automatisierungsfunktionalität auftritt, vorliegen.

Die Auswahl eines bestimmten weiteren Datensatzes kann auch alternativ oder zusätzlich mittels eines Codiersteckers 31, der in eine Schnittstelle 36 des Automatisierungsgeräts 1 gesteckt wird und/oder mittels eines Codierschalters 32 des Automatisierungsgeräts 1 erfolgen. Beim Schalten des Codierschalters 32 und/oder beim Einstecken des Codiersteckers 31 wird auch vorzugsweise gleichzeitig ein entsprechendes Freigabesignal erzeugt, so dass der ausgewählte weitere Datensatz nach Einstecken des Codiersteckers 31 und/oder nach Schalten des Bedienschalters 32 unmittelbar ausgeführt wird.

Besonders vorteilhaft aber ist es, wenn wie im Folgenden beschrieben, im Falle z.B. des Vorhandenseins von mehreren Automatisierungsgeräten, die Aktualisierung von Daten gesteuert über ein weiteres Automatisierungsgerät 10 erfolgt. Das weitere Automatisierungsgerät 10 weist im Rahmen des Ausführungsbeispiels eine Uhr 26b, sowie einen Speicher 11, in dem die drei weiteren Datensätze 3a, 3b und 3c gespeichert sind, auf. Zur Kommunikation mit anderen Komponenten weist das weitere Automatisierungsgerät 10 Kommunikationsschnittstellen 23, 24 und 35 auf. Das weitere Automatisierungsgerät 10 ist über eine Kommunikationsverbindung 14, die im Rahmen des Ausführungsbeispiels als Bus-Verbindung (z.B. USB-Bus) ausgebildet ist, mit Automatisierungsgerät 1 verbunden. Das weitere Automatisierungsgerät 10 kann z.B. als Server ausgebildet sein, wobei der Server derart realisiert sein kann, dass die Hardware des weiteren Automatisierungsgerätes 10 z.B. in Form einer Steuer- und/oder Regeleinrichtung vorliegt und die Serverfunktionalität in Form einer Serversoftware, die auf der Steuereinrichtung und/oder Regeleinrichtung abläuft, realisiert ist.

Die Aktualisierung des Automatisierungsgeräts 1 erfolgt nun über das weitere Automatisierungsgerät 10. Hierzu werden ebenfalls wie schon vorher beschrieben, im Falle der Aktualisierung über den Personal Computer 7 oder über die Bedieneinrichtung 6 die weiteren Datensätze 3a, 3b und 3c an das Automatisierungsgerät 1 von dem weiteren Automatisierungsgerät 10 übermittelt und im Automatisierungsgerät 1 gespeichert, sowie ein weiterer Datensatz vom weiteren Automatisierungsgerät 10 ausgewählt. Der Eintritt des Freigabeereignisses kann dann in Form eines Eintritts einer bestimmten Uhrzeit vorliegen. Wenn eine bestimmte Uhrzeit erreicht ist, wird von dem weiteren Automatisierungsgeräten 10 ein Freigabesignal über die Kommunikationsverbindung 14 an das Automatisierungsgerät 1 übermittelt und die Automatisierungsfunktion mit dem ausgewählten weiteren Datensatzes vom Automatisierungsgerät ausgeführt. Solchermaßen wird sowohl die Auswahl des weiteren Datensatzes, der zur Aktualisierung herangezogen werden soll, als auch der Eintritt des Freigabeereignisses vom weiteren Automatisierungsgerät 10 vorgegeben.

Wenn, wie in der Figur gestrichelt gezeichnet dargstellt, das weitere Automatisierungsgerät 10 zusätzlich mit einem zusätzlichen Automatisierungsgerät 33 über eine Kommunikationsverbindung 34 und den Kommunikationsschnittstellen 35 und 36 mit dem zusätzlichen Automatisierungsgerät 33 verbunden ist, so kann in besonders vorteilhafter Weise eine Aktualisierung von Daten sämtlicher mit dem weiteren Automatisierungsgerät 10 verbundenen Automatisierungsgeräte synchronisiert erfolgen und somit die Ausfallzeiten, z.B. innerhalb einer komplexen Maschine oder Anlage, stark reduziert werden oder im Idealfall ganz entfallen. Die Aktualisierung wird solchermaßen von dem weiteren Automatisierungsgerät 10 zentral gesteuert und es können falls notwendig vorzugsweise alle mit dem weiteren Automatisierungsgerät 10 verbundenen Automatisierungsgeräte zentral mittels des weiteren Automatisierungsgeräts 10 aktualisiert werden. Es sei an dieser Stelle angemerkt, dass das zusätzliche Automatisierungsgerät 33 identisch aufgebaut ist, wie das Automatisierungsgerät 1, so dass dessen Elemente in der Figur, der Übersichtlichkeit halber, nicht dargestellt sind.

Das weitere Automatisierungsgerät 10 ist im Rahmen des Ausführungsbeispiels über eine Kommunikationsschnittstelle 24 und eine Internetverbindung 12, d.h. über das Internet 16 mit einer Serviceeinrichtung 15, die eine entsprechende Kommunikationsschnittstelle 25 aufweisen, verbunden. Die Serviceeinrichtung 15 kann, z.B. beim Hersteller der Maschine oder Anlage, die von dem Automatisierungsgerät oder den Automatisierungsgeräten gesteuert und/oder geregelt wird, lokalisiert sein. Die Serviceeinrichtung 15 weist einen Speicher 27 auf, in dem die weiteren Datensätze 3a, 3b und 3c gespeichert sind. Über die Internetverbindung 12 werden dann von der Serviceeinrichtung 15 die weiteren Datensätze 3a, 3b und 3c an das weitere Automatisierungsgerät 10 übermittelt und dort gespeichert. Vom weiteren Automatisierungsgerät 10 werden die Daten auf das Automatisierungsgerät 1 oder falls vorhanden gegebenenfalls an das zusätzliche Automatisierungsgerät 33 übermittelt.

Die Serviceeinrichtung 15, kann dann über die Internetverbindung 12 dem weiteren Antriebsgerät 10 mitteilen, welcher der weiteren Datensätze 3a, 3b oder 3c ausgewählt werden soll und ab welcher Uhrzeit das Freigabesignal an das Automatisierungsgerät 1 und an das zusätzliche Automatisierungsgerät 33 übermittelt werden soll. Selbstverständlich ist auch möglich, z.B. mittels einer Eingabehandlung in der Serviceeinrichtung 15, ein Freigabesignal direkt über die Internetverbindung und über das weitere Automatisierungsgerät 10 an das Automatisierungsgerät 1 und/oder das zusätzliche Automatisierungsgerät 33 zu übermitteln, sowie im Vorfeld direkt auch ein bestimmter weiterer Datensatz 3a, 3b oder 3c auszuwählen, mit dem nach Auftreten des Freigabesignals am Automatisierungsgerät 1 und/oder dem zusätzlichen Automatisierungsgerät 33 die Automatisierungsfunktionalität durchgeführt werden soll. Anstatt der Internetverbindung 12 können das weitere Automatisierungsgerät 10 und die Serviceeinrichtung 15 auch über eine Modemverbindung miteinander verbunden sein. Die Schnittstelle 24 und 25 sind dann entsprechend an die Modemverbindung angepasst. Es ist aber auch möglich, dass das weitere Automatisierungsgerät 10 und die Serviceeinrichtung 15 über ein Bus, wie z.B. einem Ethernet-Bus, einem Profinet-Bus und/oder einen ProfibusDP miteinander zu verbinden. Die Schnittstelle 24 und 25 sind dann entsprechend dem verwendeten Bus angepasst.

Im Rahmen des Ausführungsbeispiels weist das Automatisierungsgerät 1 auch eine Uhr 26a auf, wobei der Eintritt des Freigabeereignisses in Form eines Eintrittes einer bestimmten Uhrzeit vorliegen kann. D.h. der Anwender kann am Automatisierungsgerät eine bestimmte Uhrzeit vorgeben und bei Eintritt der Uhrzeit tritt der Eintritt des Freigabeereignisses auf, d.h. es wird ein Freigabesignal erzeugt und die Automatisierungsfunktionalität wird mit dem zuvor ausgewählten weiteren Datensatz durchgeführt.

Weiterhin ist es auch möglich, dass das Automatisierungsgerät selbst ein entsprechendes Eingabefeld aufweist, in dem vom Anwender per Hand ein bestimmter weiterer Datensatz ausgewählt werden kann und dieser dann anschließend mittels einer entsprechenden Eingabe frei geschaltet wird, d.h. der Eintritt des Freigabeereignisses liegt in diesem Fall durch eine Eingabehandlung des Tastenfeldes des Automatisierungsgeräts vor.

Ferner sei an dieser Stelle angemerkt, dass generell bei den oben beschriebenen Ausführungsbeispielen die Auswahl eines weiteren Datensatzes auch gleichzeitig den Eintritt des Freigabeereignisses darstellen kann. Wenn z.B. dem Automatisierungsgerät 1, die Information, welcher der weiteren Datensätze ausgewählt werden soll, übermittelt wird, so kann der Eintritt des Freigabeereignis auch in Form der Übermittelung dieser Information vorliegen. Es muss also nicht unbedingt die Auswahl des weiteren Datensatzes zeitlich vor dem Eintritt des Freigabeereignisses liegen sondern kann auch mit diesem zusammen liegen.

Weiterhin sei an dieser Stelle angemerkt, dass generell bei den oben beschriebenen Ausführungsbeispielen, die einzelnen Datensätze der weiteren Datensätze auch zu stark unterschiedlichen Zeitpunkten hintereinander an das Automatisierungsgerät übermittelt werden können. So kann z.B. der weitere Datensatz 3b einen Woche später als der weitere Datensatz 3a und der Datensatz 3c einen Monat später als der Datensatz 3b an das Automatisierungsgerät übermittelt werden.

Ferner sei an dieser Stelle angemerkt, dass die Komponenten des Automatisierungssystems selbstverständlich nicht unbedingt wie im Ausführungsbeispiel beispielhaft ausgeführt über einen USB-Bus miteinander kommunizieren müssen, sondern auch über beliebige andere Bussysteme, wie z.B. einem Ethernet-Bus, einem Profinet-Bus und/oder einen ProfibusDP, miteinander kommunizieren können.

## Patentansprüche

1. Verfahren zur Aktualisierung von Daten eines Automatisierungsgeräts (1), wobei vom Automatisierungsgerät (1), mit einem aktuellen Datensatz (2), der Daten aufweist, eine Automatisierungsfunktionalität durchgeführt wird, wobei während die Automatisierungsfunktionalität mit dem aktuellen Datensatz (2) durchgeführt wird, ein weiterer Datensatz (3a) an das Automatisierungsgerät (1) übermittelt und im Automatisierungsgerät (1) gespeichert wird, wobei nach Eintritt eines Freigabeereignisses die Automatisierungsfunktionalität (1) mit dem weiteren Datensatz (3a) durchgeführt wird.

2. Verfahren nach Anspruch 1, **dadurch gekennzeichnet, dass** während die Automatisierungsfunktionalität mit dem aktuellen Datensatz (2) durchgeführt wird, mehrere weitere Datensätze (3a,3b,3c) an das Automatisierungsgerät übermittelt und im Automatisierungsgerät (1) gespeichert werden, wobei unter den weiteren Datensätzen 3a,3b,3c) ein weiterer Datensatz (3a) ausgewählt wird, wobei nach Eintritt eines Freigabeereignisses die Automatisierungsfunktionalität mit dem ausgewählten weiteren Datensatz (3a) durchgeführt wird.

3. Verfahren nach einem der vorhergehenden Ansprüche, **dadurch gekennzeichnet, dass** der weitere Datensatz (3a) oder die weiteren Datensätze (3a,3b,3c) von einer Recheneinrichtung (7) und/oder von einer Bedieneinrichtung (6) des Automatisierungsgeräts (1) und/oder von einem in das Automatisierungsgerät (1) gesteckten Wechselspeichers (30) und/oder von einem weiteren Automatisierungsgerät (10), an das Automatisierungsgerät (1) übermittelt werden.

4. Verfahren nach einem der vorhergehenden Ansprüche, **dadurch gekennzeichnet, dass** der Eintritt des Freigabeereignisses in Form eines Steckens eines Kodiersteckers (31) in das Automatisierungsgerät (1) und/oder in Form eines Schaltens eines Kodierschalters (31) am Automatisierungsgerät (1) und/oder in Form einer Eingabehandlung an einem mit dem Automatisierungsgerät (1) über eine Kommunikationsverbindung (13) verbundenen Recheneinrichtung (7) und/oder in Form einer Eingabehandlung an einer mit dem Automatisierungsgerät (1) über eine Kommunikationsverbindung (5) verbundenen Bedieneinrichtung (6) und/oder in Form einer Eingabehandlung am Automatisierungsgerät (1) und/oder in Form des Eintritts eines definierten internen Ereignisses im Automatisierungsgerät (1) und/oder in Form eines Auftretens eines Freigabesignals, welches dem Automatisierungsgeräts (1) über eine Internetverbindung (12) und/oder eine Modemverbindung übermittelt wird.

5. Verfahren nach einem der vorhergehenden Ansprüche, **dadurch gekenneichnet, dass** das Automatisierungsgerät (1) und/oder das weitere Automatisierungsgerät (10) eine Uhr (26a,26b) aufweisen und der Eintritt des Freigabeereignisses in Form eines Eintritts einer bestimmten Uhrzeit vorliegt.

6. Verfahren nach einem der vorhergehenden Ansprüche, **dadurch gekennzeichnet, dass** der Eintritt des Freigabeereignisses in Form eines Auftretens eines Freigabesignals, welches dem Automatisierungsgeräts (1) von einem weiteren Automatisierungsgeräts (10) übermittelt wird, vorliegt.

7. Verfahren nach einem der Ansprüche 2 bis 6, **dadurch gekennzeichnet, dass** der weitere Datensatz (3a), der ausgewählt werden soll, vom weiteren Automatisierungsgerät (10) vorgeben wird.

8. Verfahren nach einem der vorhergehenden Ansprüche, d a**durch gekennzeichnet, dass** der weitere Datensatz (3a) oder die weiteren Datensätze (3a,3c,3c) über eine Modemverbindung und/oder Internetverbindung (12) an das weitere Automatisierungsgerät (1) übertragen werden.

9. Verfahren nach einem der vorhergehenden Ansprüche, **dadurch gekennzeichnet , dass** das weitere Automatisierungsgerät (10) als Server ausgebildet ist.

10. Verfahren nach einem der Ansprüche 2 bis 9, **dadurch gekennzeichnet, dass** die Auswahl des weiteren Datensatzes (3a) unter den weiteren Datensätzen (3a,3b,3c) auch gleichzeitig den Eintritt des Freigabeereignisses darstellt.

11. Automatisierungsgerät, wobei das Automatisierungsgerät (1) ausgebildet ist mit einem aktuellen Datensatz (2), der Daten aufweist, eine Automatisierungsfunktionalität durchzuführen, wobei das Automatisierungsgerät (1) derart ausgebildet ist, dass während das Automatisierungsgerät (1) die Automatisierungsfunktionalität mit dem aktuellen Datensatz (2) durchführt, ein weiterer Datensatz (3a) an das Automatisierungsgerät übermittelbar und im Automatisierungsgerät speicherbar ist, wobei das Automatisierungsgerät (1) derart ausgebildet ist, dass das Automatisierungsgerät (1) nach Eintritt eines Freigabeereignisses die Automatisierungsfunktionalität mit dem weiteren Datensatz (3a) durchführt.

12. Automatisierungsgerät nach Anspruch 11, **dadurch gekennzeichnet , dass** das Automatisierungsgerät (1) derart ausgebildet ist, dass während die Automatisierungsfunktionalität mit dem aktuellen Datensatz (2) durchgeführt wird mehrere weitere Datensätze (3a,3b,3c) an das Automatisierungsgerät übermittelbar und im Automatisierungsgerät speicherbar sind, wobei das Automatisierungsgerät (1) derart ausgebildet ist, dass unter den weiteren Datensätzen (3a,3b, 3c) ein weiterer Datensatz (3a) auswählbar ist, wobei das Automatisierungsgerät (1) derart ausgebildet ist, dass nach Eintritt eines Freigabeereignisses die Automatisierungsfunktionalität mit dem ausgewählten weiteren Datensatz (3a) durchgeführt wird.

13. Automatisierungssystem, wobei das Automatisierungssystem ein Automatisierungsgerät (1) nach Anspruch 11 oder Anspruch 12 aufweist, wobei das Automatisierungssystem ein weiteres Automatisierungsgerät (10) aufweist, das mit dem Automatisierungsgerät (1) über eine Kommunikationsverbindung (14) verbunden ist, wobei das weitere Automatisierungsgerät (10) einen Speicher (11) zur Speicherung des weitern Datensatzes (3a) oder weiteren Datensätzen (3a,3b,3c) aufweist, wobei das Automatisierungssystem derart ausgebildet ist, dass der weitere Datensatz (3a) oder die weiteren Datensätze (3a,3b,3c) von dem weiteren Automatisierungsgerät (10), an das Automatisierungsgerät (1) übermittelbar sind.

14. Automatisierungssystem nach Anspruch 13, **dadurch gekennzeichnet, dass** das weitere Automatisierungsgerät (10) den weiteren Datensatz (3a), der ausgewählt werden soll, dem Automatisierungsgerät (1) vorgibt.

15. Automatisierungssystem nach Anspruch 13 oder 14, **dadurch gekennzeichnet , dass** das weitere Automatisierungsgerät (10) den Eintritt des Freigabeereignisses dem Automatisierungsgerät (1) in Form eines Auftretens eines Freigabesignals übermittelt.

16. Automatisierungssystem nach Anspruch 13, 14 oder 15, **dadurch gekennzeichnet, dass** der weitere Datensatz (3a) oder die weiteren Datensätze (3a,3b,3c) über eine Modemverbindung und/oder eine Internetverbindung an das weitere Automatisierungsgerät (10) übertragbar sind.

17. Automatisierungssystem nach Anspruch 13, 14, 15 oder 16, **dadurch gekennzeichnet, dass** das weitere Automatisierungsgerät (10) als Server ausgebildet ist.
